# EUROPÄISCHE PATENTSCHRIFT

(11) **EP 2 325 520 B1**
(45) Veröffentlichungstag und Bekanntmachung des Hinweises auf die Patenterteilung: **13.02.2013**
(21) Anmeldenummer: 10191350.7
(22) Anmeldetag: 16.11.2010
(51) Int. Cl.: F16F 1/44, F16F 1/373

(54) **Standfuß, insbesondere für eine Tisch-Küchenmaschine**
Appliance foot, particularly for a tabletop kitchen machine
Pied de support, notamment pour une machine de cuisine sur table

(30) Priorität: 21.11.2009 DE 102009054201
(43) Veröffentlichungstag der Anmeldung: 25.05.2011
(60) Teilanmeldung: 11185557.3
(73) Patentinhaber: Vorwerk & Co. Interholding GmbH, 42275 Wuppertal (DE)
(72) Erfinder: Schomacher, Jutta, 42489 Wülfrath (DE); Dallmeier, Stephanie, 42279 Wuppertal (DE)
(74) Vertreter: Müller, Enno

(56) Entgegenhaltungen:
- WO-A1-90/07658
- DE-U1- 8 811 934
- GB-A- 587 164
- JP-A- 59 194 144
- US-A1- 2001 040 206
- US-A1- 2005 115 022
- US-A1- 2007 220 703

## Beschreibung

Die Erfindung betrifft einen Standfuß, insbesondere für eine Tisch-Küchenmaschine, wobei die Küchenmaschine einen nach unten abragenden, gehäuseseitigen Fortsatz aufweist, der auf einem eine Standfläche ausbildenden Elastomerteil aufsitzt, wobei der Fortsatz ein nach unten abragendes Dornteil aufweist und das Dornteil in dem eine entsprechend nach oben weisende Öffnung aufweisenden Elastomerteil einsitzt, wobei das Dornteil aus einem Hartwerkstoff gebildet ist und mit dem Elastomerteil ebenflächig zusammenwirkt, wobei das Elastomerteil oberhalb der Zusammenwirkungsfläche unmittelbar elastisch rückstellfähig an dem Dornteil angebunden ist.

Bei einem aus der US-A-2007/220703 bekannten Standfuß ist das Dornteil in einem tennisballartigen Hüllteil aufgenommen, das mit einer einheitlichen Schalenkonstruktion gebildet ist. Das Dornteil kann entsprechend keine Horizontalbewegung relativ zu dem Schalenteil ausführen, ohne dass das gesamte Schalenteil bewegt wird. Das Schalenteil ist auch insgesamt gekrümmt während das Dornteil eine horizontale Stirnfläche aufweist.

Aus der US-A-2001/040206 ist ein Standfuß bekannt, insbesondere für ein Möbelstück, bei welchem ein eine Schalendecke ausbildendes und eine nach oben weisende Öffnung besitzendes Elastomerteil vorgesehen ist, in dem ein Fuß des Gegenstandes einsitzt. Eine stoßartige Belastung ist aber vergleichsweise ungünstig nur aufnehmbar.

Darüber hinaus ist zum Stand der Technik auf die US 2005/0115022 A1 zu verweisen. Hieraus ist ein Übergreifschuh für einen Fuß eines Gerätes bekannt. In dem hülsenartig ausgebildeten Teil sind innenseitig Längsrippen ausgebildet, die unmittelbar mit dem Fuß oder Dornteil zusammenwirken.

Ausgehend von dem vorbeschriebenen Stand der Technik stellt sich der Erfindung die Aufgabe, einen Standfuß, insbesondere für eine Tisch-Küchenmaschine anzugeben, der eine günstige Kompensation von Versetzungen, insbesondere stoßartigen Versetzungen, die die Maschine auszuführen sucht, zulässt.

Diese Aufgabe ist beim Gegenstand des Anspruches 1 gelöst, wobei insbesondere darauf abgestellt ist, dass das Elastomerteil schalenartig ausgebildet ist, mit einer in Übergriff zu dem Dornteil stehenden Wandung, wobei das schalenartige Elastomerteil eine Schalendecke aufweist, mit einem Abstand zu dem Schalenboden, die an dem Dornteil zum Verschluss eines Schaleninnenraumes angebunden ist, wobei die Schalendecke elastisch rückstellfähig ausgebildet ist, so dass die Schalendecke zufolge Dehnung bzw. Stauchung eine Horizontalbewegung des Dornteils relativ zum Schalenteil mit vollziehen kann, wobei der verschlossene Hohlraum des Schaleninnenraumes mit Fluid gefüllt ist.

Es bedarf keiner für den Benutzer umständlichen Anordnung des Elastomerteils bei jedem Standortwechsel des Gerätes. Die Anbindung erfolgt hierbei bevorzugt durch Klemmen oder Verrasten, weiter ggf. unter Nutzung von Spannriegeln bzw. Spannelementen. Die gewählte Elastizität der Anbindung bietet trotz entsprechende Anbindung an das Gehäuse eine relative Verlagerbarkeit von Dornteil und Elastomerteil zueinander, wobei bevorzugt die Anbindungsbereiche festliegen.

Bevorzugt ist auch das Elastomerteil oberhalb der Zusammenwirkungsfläche unmittelbar rückstellfähig an dem Dornteil angebunden, wobei weiter bevorzugt das Dornteil unmittelbar auf dem Elastomerteil aufsitzt, welche Anordnung insbesondere Schwingungen in Horizontalrichtung zufolge Reibung in Wärme umwandelt. Diese Relativverlagerbarkeit des Dornteiles auf dem Elastomerteil ist durch die gewählte Anbindung des Elastomerteils an dem Dornteil ungehindert, dies zufolge der elastisch rückstellfähigen Ausgestaltung der Anbindung unter Bildung des zusammenwirkenden Bereichs dünnwandig, membranartig, mit einer bevorzugten Materialstärke von 0,1 bis 0,5 mm.

Das schalenartige Elastomerteil weist eine in Übergriff zu dem Dornteil stehenden Wandung auf. Der Schalenboden bietet auf der der Standfläche abgewandten Fläche die Aufsetzfläche für den gehäuseseitigen Dornteil, wobei weiter bevorzugt diese Fläche des Schalenbodens so groß gewählt ist, dass eine bevorzugte Horizontalverlagerbarkeit des Dornteiles auf der Fläche erreicht werden kann. Entsprechend ist das Dornteil in dem elastomerteilseitigen Schalenteil mit einem quer zur Dornerstreckung verbleibenden Spiel aufgenommen, wobei weiter bevorzugt das verbleibende Spiel zusammengefasst dem 0,2- des 0,7-Fachen des freien Durchmessermaßes des Schalenteiles entspricht. Die Schalenwandung umfasst das Dornteil bevorzugt umlaufend, wobei weiter bevorzugt die Schalenöffnung nach vertikal oben weist und die sich entsprechend einstellende Stirnfläche der umlaufenden Schalenwandung vertikal beabstandet ist zu einer zugeordneten Bodenfläche des Gehäuses. Die Schalendecke verläuft mit Abstand zu dem Schalenboden. Sie ist an dem Gehäuse und/oder dem Dornteil zum Verschluss des Schaleninnenraums angebunden. Die so geformte Schalendecke schützt den Schaleninnenraum vor Verschmutzung oder vor Ansiedlung von Ungeziefer. Die Schalendecke ist durchsetzt von dem Dornteil des gehäuseseitigen Fortsatzes. In bevorzugter Ausgestaltung ist die Schalendecke elastisch rückstellfähig ausgebildet und bietet die vorbeschriebene elastisch rückstellfähige Anbindung des Elastomerteils an das maschinenseitige Gehäuse bzw. an das Dornteil. Zufolge der elastisch rückstellfähigen Ausgestaltung der Schalendecke ist das Dornteil auch bei Durchsatz der Schalendecke frei in einer Richtung quer zur Vertikalerstreckung beweglich.

Der verschlossene Hohlraum, der mit einem Fluid gefüllt ist, lässt zumindest eine unterstützende Flüssigkeitsreibung erreichen. Es kann etwa unter Anwendung von Öl eine Stoßdämpferwirkung insbesondere in horizontaler Richtung gegeben sein.

In weiterer Ausgestaltung können zwischen den Oberflächen von Elastomerteil und Dornteil beispielsweise Kugeln zur Bildung einer Wälzlagerung angeordnet sein.

Nachstehend ist die Erfindung anhand der beigefügten Zeichnung, welche lediglich vier Ausführungsbeispiele darstellt, näher erläutert. Es zeigt:
- Fig. 1: in perspektivischer Darstellung eine Tisch-Küchenmaschine mit Standfüßen zum Aufstellen der Küchenmaschine auf einer Tischfläche;
- Fig. 2: einen gerätebodenseitig angeordneten Standfuß in einer nicht erfindungsgemässen Ausführungsform;
- Fig. 3: den Schnitt gemäß der Linie III-III in Fig. 2, eine unbelastete Grundstellung betreffend (nicht erfindungsgemäß);
- Fig. 4: eine der Fig. 3 entsprechende Darstellung, jedoch in einer Belastungsstellung (nicht erfindungsgemäß);
- Fig. 5: eine der Fig. 2 entsprechende Darstellung, jedoch eine erfindungsgemässe Ausführungsform betreffend;
- Fig. 6: den Schnitt gemäß der Linie VI-VI in Fig. 5 und
- Fig. 7: eine Schnittdarstellung gemäß Fig. 6, eine belastete Stellung betreffend.

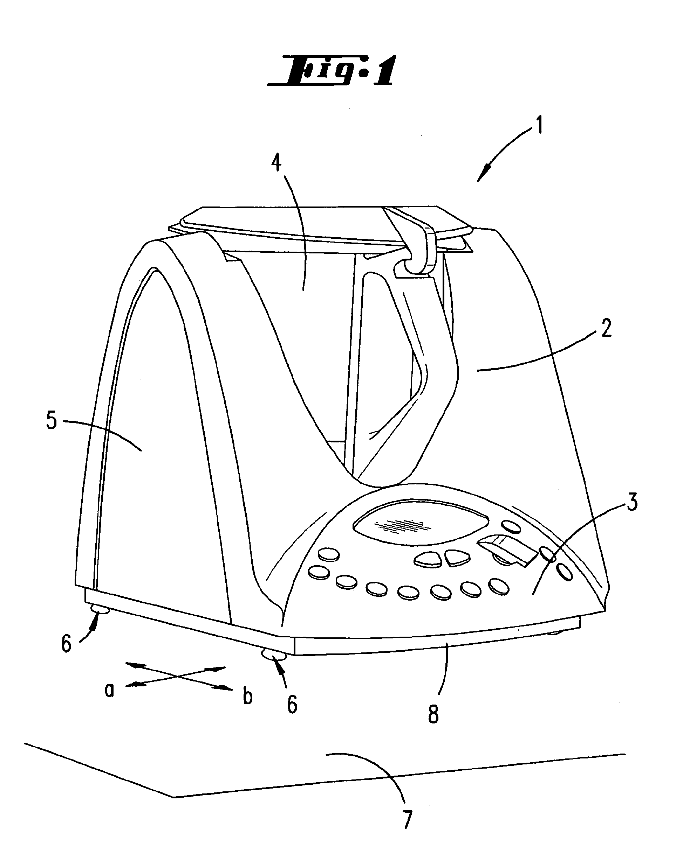

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührtopf 4 zugeordnet. Dieser sitzt in der Rührgefäß-Aufnahme 2 ein. In dem Rührtopf 4 ist zugeordnet einem Rührtopfboden, ein Rührwerk vorgesehen, welches über einen in der Küchenmaschine 1 unterhalb der Aufnahme 2 angeordneten, nicht dargestellten Elektroantrieb betrieben wird.

Das Gehäuse 5 der Küchenmaschine 1 stützt sich über Stützfüße 6 auf einer Fläche, hier auf einer Tischfläche 7 ab. Die Stützfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird über das Gehäuse 5 und die Stützfüße 6 abgestützt. Ist die Teigkugel ungünstig im Rührgefäß 4 angeordnet, bleibt das Rührwerk gegebenenfalls kurzzeitig im Teig stecken. Zufolge dessen wird das Drehmoment kurzzeitig erhöht. Dieser Momentenstoß wird von den Stützfüßen 6 kompensiert, so dass sich das Gerät nicht ruckartig und sprunghaft um seinen Schwerpunkt dreht.

Die Bewegung des Gehäuses 5 in horizontaler Richtung (vgl. Pfeile a und b in Fig. 1) wird zugelassen. Das Gehäuse 5 kann sich relativ zu den Stützfüßen 6 bzw., wie nachstehend näher erläutert, relativ zu einem Teilabschnitt der Stützfüße 6 in der horizontalen Ebene bewegen. Die sprungartig eingeleitete Energie wird in Reibung und/ oder Rückstell- und Verformungsenergie umgewandelt. Die Stützfüße 6 sind hierbei weiter mit der Standfläche - hier der Tischfläche 7 - verbunden, insbesondere reibschlüssig verbunden.

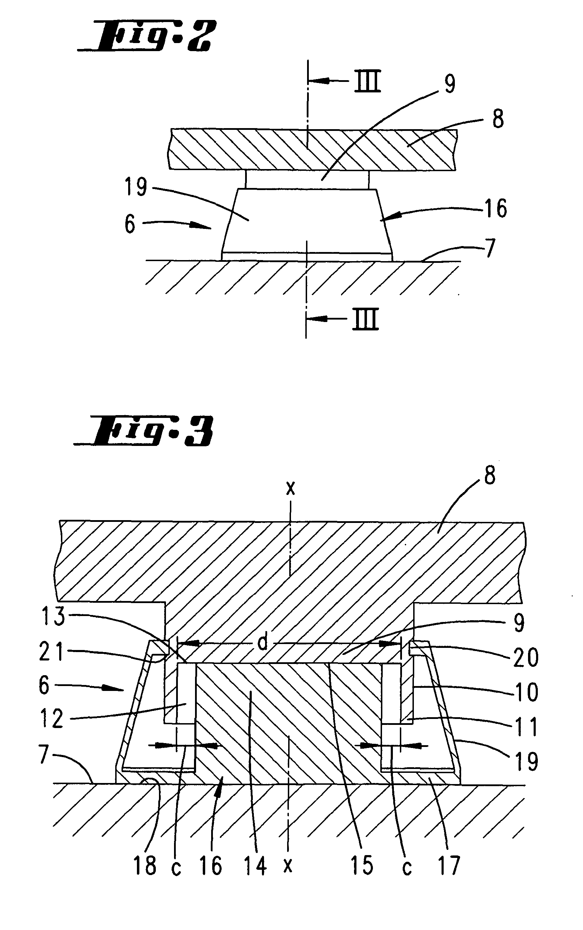

Die Fig. 2 bis 4 zeigen eine Ausführungsform eines Stützfußes 6 (nicht gemäß der Erfindung). Dieser ist grundsätzlich zweiteilig gestaltet, wobei ein Teil gehäusefest vorgesehen ist. Hierbei handelt es sich um einen Fortsatz 9, der gehäuseseitig, insbesondere gehäusebodenseitig angeformt ist und nach vertikal unten über die nach unten gerichtete Gehäusebodenfläche abragt. Der Fortsatz 9 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 um einen Hartkunststoff- oder Metallkörper handeln, der weiter bevorzugt mit Bezug auf eine zentrale den Fortsatz 9 durchsetzende Vertikalachse x rotationssymmetrisch ausgebildet ist. Neben der einstückigen Ausgestaltung ist alternativ ein Fortsatz 9 vorgesehen, der unterseitig am Gehäuseboden 8 festlegbar, beispielsweise einschraubbar ist.

Der Fortsatz 9 formt ein sich nach vertikal unten öffnendes Schalenteil 10 aus, dessen Außendurchmesser dem Außendurchmesser des Fortsatzes 9 entspricht. Die umlaufende Schalenwandung 11 begrenzt in Horizontalrichtung einen Schalenraum 12, wobei die Wandungsstärke in dem dargestellten Ausführungsbeispiel etwa 1/20 des Schalenteil-Außendurchmessers entspricht. Die vertikale Höhe der Schalenwandung 11 entspricht bevorzugt etwa 1/4 des Schalenteil-Außendurchmessers.

Der sich hieraus ergebende Schalenboden 13 erstreckt sich in einer quer zur Vertikalachse x gerichteten Ebene, weiter in einer Horizontalebene, die entsprechend parallel ausgerichtet ist zur Tischfläche 7.

In das Schalenteil 10, weiter in den Schalenraum 12 eingreifend ist ein Dornteil 14 vorgesehen. Auch hierbei handelt es sich bevorzugt um ein rotationssymmetrisches Bauteil mit einer vertikal nach oben weisenden Stirnfläche 15, die parallel ausgerichtet ist zum Schalenboden 13, entsprechend sich auch bevorzugt in einer Horizontalebene erstreckt.

Das Dornteil 14 ist Teil eines Elastomerteils 16. Letzteres weist einen Boden 17 auf, mit einer vertikal nach unten weisenden Standfläche 18 zur Abstützung auf der Tischfläche 7. Der Boden 17 ist in dem dargestellten Ausführungsbeispiel im Grundriss kreisrund als Scheibe ausgebildet, mit einem Durchmesser, der etwa dem 2-Fachen des Außendurchmessers des Dornteils 14 entspricht. Letzteres sitzt zentral auf dem Boden 17 und ist mit diesem verbunden, weiter bevorzugt materialeinheitlich und einstückig mit diesem verbunden.

Die vertikale Höhe des Dornteiles 14 ist so gewählt, dass das Schalenteil 10 in Zuordnungsstellung, d. h. in der Auflagestellung des Schalenbodens 13 auf der Stirnfläche 15 des Dornteils 14 freikragend endet, d. h. mit vertikalem Abstand zur zugewandten Oberfläche des elastomerteilseitigen Bodens 17 endet. So ist in dem dargestellten Ausführungsbeispiel eine vertikale Höhe des Dornteiles 14 gewählt, die etwa dem 2-Fachen der vertikalen Tiefe des Schalenteiles 10 bzw. der vertikalen Höhe der Schalenwandung 11 entspricht.

Das Dornteil 13 ist in dem Schalenteil 10 mit einem quer zu der Domerstreckung verbleibenden Spiel aufgenommen, so dass eine relative Beweglichkeit des Schalenteils 10 bzw. des Fortsatzes 9 zu dem Dornteil 14 erreichbar ist. So entspricht in dem dargestellten Ausführungsbeispiel das verbleibende Spiel (Addition der sich beidseitig des Dornteiles 14 in Fig. 3 einstellenden Spielmaße c) zusammengefasst etwa 1/6 des freien Innendurchmessers d des Schalenteiles 10. Außenseitig ist das Schalenteil 10 umfasst von einem Mantelabschnitt 19 des Elastomerteils 16. Letzterer ist an dem Boden 17 des Elastomerteils 16 entlang der Randkante angebunden und erstreckt sich hüllenartig unter konischer Verjüngung bei zunehmender vertikaler Beabstandung zum Boden 17 bis in den Übergangsbereich von Schalenteil 10 und Fortsatz 9. Hier ist der Mantelabschnitt 19 an dem Fortsatz 9 rastgehaltert, wozu eine entsprechende umlaufende Verdichtung 20 des Mantelabschnittes 19 in eine wandungsaußenseitig des Fortsatzes 9 vorgesehene Ringnut 21 eingreift.

Der Mantelabschnitt 19 ist insbesondere gegenüber dem Boden 17 verdünnt ausgebildet, weiter membranartig mit einer Materialstärke von 0,1 bis 0,5 mm. Hieraus ergibt sich eine hohe Flexibilität des Mantelabschnittes 19. Letzterer ist zufolge der bevorzugt einheitlichen Elastomereigenschaften elastisch rückstellfähig eingestellt. Mittels des Mantelabschnittes 19 ist der Zusammenwirkungsbereich von Dornteil 14 und Schalenteil 10 beispielsweise vor Verschmutzungen geschützt. Zudem ist hierdurch eine unverlierbare Anbindung des Dornteiles 14 an den Fortsatz 9 gegeben.

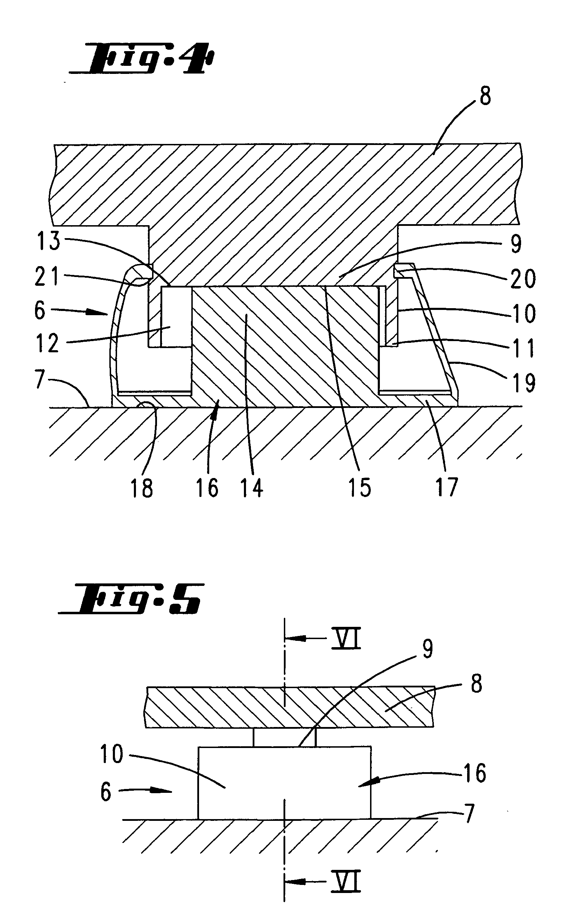

Zufolge der vorbeschriebenen Ausgestaltung eines Stützfußes 6 ist eine schwimmende Lagerung in der horizontalen Bewegungsrichtung a und b gegeben, wobei in vertikaler Bewegungsrichtung die Verbindung zwischen Fortsatz und Elastomerteil 16 steif gestaltet ist, so dass unterkritische Schwingungen, beispielsweise hervorgerufen durch eine Unwuchterregung, gut kompensiert werden können. Hierbei ist ein Abgleiten des Fortsatzes 9 relativ zu dem Dornteil 14 im Bereich der aufeinanderliegenden Flächen (Schalenboden 13 und Stirnfläche 15) erreichbar (vgl. Fig. 4), wobei die Horizontalbewegung zufolge der überlappenden Schalenwandung 11 begrenzt ist.

Hierbei ist der Reibungswiderstand zwischen Schalenboden und Stirnfläche 15 des Dornteiles 14 geringer als der Reibungswiderstand zwischen der Standfläche 18 des Elastomerteils 16 und der Tischfläche 7.

Der als dünne elastische Schicht ausgebildete Mantelabschnitt 19 beeinträchtigt hierbei nicht die Bewegung des Gehäuses 5 bzw. des an diesem fest angebrachten Fortsatzes 9, sondern dient lediglich zur Fixierung beim Hochheben und Tragen des Gerätes sowie zur Abdeckung des geschaffenen Hohlraums. Durch Aufhebung der Rastverbindung kann das Elastomerteil 16 leicht abgenommen werden und so separat gereinigt werden.

Zur Bildung des Elastomerteils 16 kommen bevorzugt Naturkautschuke oder synthetische Kautschuke wie beispielsweise Styrol-Butadien-Kautschuk zur Anwendung.

Die Fig. 5 bis 7 zeigen eine erfindungsgemässe Ausführungsform. Hier formt der gehäuseseitige Fortsatz 9 ein nach vertikal unten weisendes, starres Dornteil 14 aus, das in ein nach vertikal oben offenes Schalenteil 10 eintaucht. Das Schalenteil 10 ist hier als Elastomerteil 16 gebildet, mit einem mit seiner Standfläche 18 in der Nutzungsstellung auf der Tischfläche 7 aufliegenden Schalenboden 13 und einer bodenseitig, randseitig bevorzugt umlaufenden Schalenwandung 11, deren vertikale Höhe geringer bemessen ist als die des Dornteils 14. Letzteres stützt sich mit der vertikal nach unten weisenden Stirnfläche auf der zugewandten Oberfläche des Schalenbodens 13 ab.

Die Zusammenwirkung von dornteilseitiger Stirnfläche 15 und zugewandter Oberfläche des Schalenbodens 13 ist auch in diesem Ausführungsbeispiel in einer ebenen Fläche erreicht, weiter bevorzugt in einer Horizontalebene.

Das Schalenteil 10 weist in dem dargestellten Ausführungsbeispiel einen Innendurchmesser auf, der etwa dem 3-Fachen des Dornteildurchmessers entspricht. Demzufolge ist das Dornteil 14 auch hier mit einem horizontalen Spiel in dem Schalenteil 10 aufgenommen, so dass eine Relativverlagerung zufolge Stöße oder Schwingungen in der Küchenmaschine 1 erlaubt sind. Auch ist hierbei der Reibungswiderstand zwischen der dornteilseitigen Stirnfläche 15 und dem Schalenboden 13 geringer gewählt als zwischen der Standfläche 18 des Schalenbodens 13 und der Tischfläche 7, so dass das schalenartige Elastomerteil 16 auch bei Einleitung sprungartiger Energie mit der Tischfläche 7 verbunden bleibt.

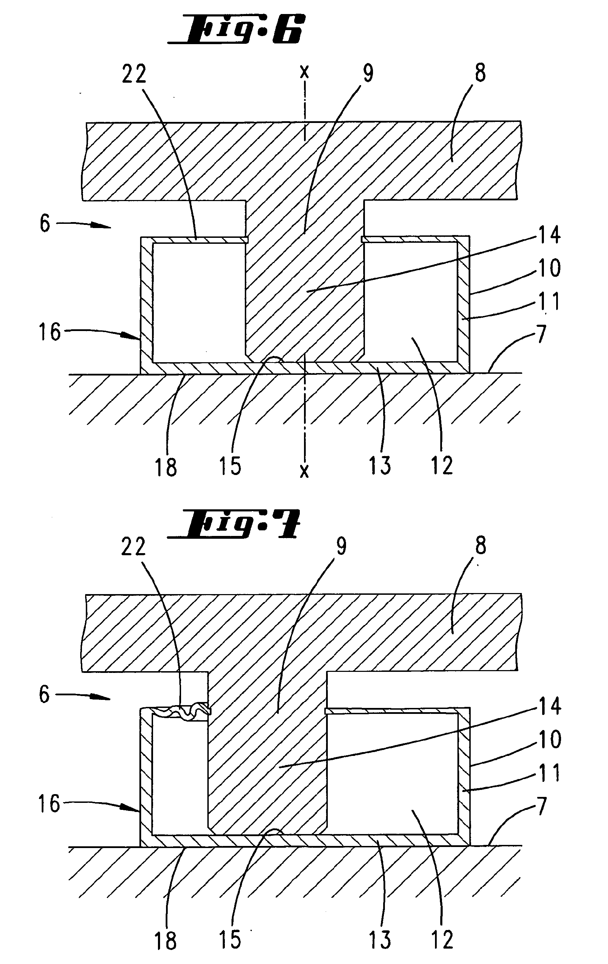

Der Schalenraum 12 ist überdeckt von einer vom Dornteil 14 durchsetzten Schalendecke 22. Diese ist, wie der Mantelabschnitt 19 der ersten Ausführungsform, gegenüber der Schalenwandung 11 hinsichtlich der Materialstärke verringert, zur Bildung der Schalendecke 22 in Art einer elastischen Membran. Diese Schalendecke 22 ist umlaufend im Bereich des freien nach vertikal oben ragenden Randes an der Schalenwandung 11 befestigt und weist in einer Grundausrichtung zentral eine Durchtrittsöffnung für das Dornteil 14 auf. Entlang des Randes der Durchtrittsöffnung ist die membranartige Schalendecke 22 beispielsweise durch Verkleben oder Verschweißen mit dem Dornteil 14 verbunden (vgl. Fig. 6).

Zufolge dieser Anordnung ist der Schalenraum 12 verschlossen. Durch die rückstellfähig elastische Ausgestaltung der Schalendecke 22 kann diese zufolge Dehnung bzw. Stauchung die Horizontalbewegung des Dornteiles 14 relativ zum Schalenteil 10 mit vollziehen (vgl. Fig. 7).

## Patentansprüche

1. Standfuß (6), insbesondere für eine Tisch-Küchenmaschine (1), wobei die Küchenmaschine (1) einen nach unten abragenden, gehäuseseitigen Fortsatz (9) aufweist, der auf einem, eine Standfläche (18) ausbildenden Elastomerteil (16) aufsitzt, wobei der Fortsatz (9) ein nach unten abragendes Dornteil (14) aufweist und das Dornteil (14) in dem, eine entsprechend nach oben weisende Öffnung aufweisenden Elastomerteil (16) einsitzt, wobei das Dornteil (14) aus einem Hartwerkstoff gebildet ist und mit dem Elastomerteil (16) ebenflächig zusammenwirkt, wobei das Elastomerteil (16) oberhalb der Zusammenwirkungsfläche unmittelbar elastisch rückstellfähig an dem Dornteil (14) angebunden ist, wobei das Elastomerteil (16) schalenartig ausgebildet ist, mit einer in Übergriff zu dem Dornteil (14) überstehenden Wandung (11), wobei das schalenartige Elastomerteil (16) eine Schalendecke (22) aufweist, mit einem Abstand zu dem Schalenboden (13), die an dem Dornteil (14) zum Verschluss eines Schaleninnenraumes (12) angebunden ist, wobei die Schalendecke (22) elastisch rückstellfähig ausgebildet ist, sodass die Schalendecke (22) zufolge Dehnung bzw. Stauchung eine Horizontalbewegung des Dornteiles (14) relativ zum Schalenteil (10) mit vollziehen kann, wobei der verschlossene Hohlraum des Schaleninnenraumes (12) mit einen Fluid gefüllt ist.

2. Standfuß nach Anspruch 1, **dadurch gekennzeichnet, dass** das Dornteil (14) unmittelbar auf dem Elastomerteil (16) aufsitzt.

## Claims

1. Foot (6), in particular for a table top food processor (1), wherein the food processor (1) comprises a housing-side projection (9) which projects downwards and rests on an elastomer part (16) which forms a base (18), wherein the projection (9) comprises a mandril part (14) which projects downwards and the mandril part (14) is located in the elastomer part (16) which comprises an opening which is directed correspondingly upwards, wherein the mandril part (14) is formed from a rigid material and cooperates with the elastomer part (16) in a planar manner, wherein the elastomer part (16) is connected directly to the mandril part (14) above the cooperation surface so as to be resilient and capable of restoration, wherein the elastomer part (16) has a shell-like configuration and a wall (11) which projects so as to overlap the mandril part (14), wherein the shell-like elastomer part (16) comprises a shell cover (22) at a distance from the shell bottom (13), which shell cover is connected to the mandril part (14) to seal a shell interior (12), wherein the shell cover (22) is resilient and capable of restoration, such that the shell cover (22) is able to replicate, as a result of extension or compression, a horizontal movement of the mandril part (14) relative to the shell part (10), wherein the sealed cavity of the shell interior (12) is filled with a fluid.

2. Foot according to claim 1, **characterised in that** the mandril part (14) rests directly on the elastomer part (16).

## Revendications

1. Pied de support (6), notamment pour une machine de cuisine sur table (1), la machine de cuisine (1) présentant un prolongement (9) côté boîtier, dépassant vers le bas, qui loge sur une partie en élastomère (16) réalisant une surface de support (18), le prolongement (9) présentant une partie d'épine (14) dépassant vers le bas et la partie d'épine (14) logeant dans la partie en élastomère (16) présentant une ouverture dirigée en conséquence vers le haut, la partie d'épine (14) étant réalisée en un matériau dur et coagissant à surface plane avec la partie en élastomère (16), la partie en élastomère (16) étant liée à la partie d'épine (14) au-dessus de la surface de coopération de manière à être apte au rappel élastique direct, la partie en élastomère (16) étant réalisée comme une coque, avec une paroi (11) dépassant en recouvrement de la partie d'épine (14), la partie en élastomère (16) de type coque présentant un recouvrement de coque (22) avec une distance par rapport au fond de coque (13), lequel recouvrement est lié à la partie d'épine (14) pour la fermeture de l'espace intérieur de la coque (12), le recouvrement de coque (22) étant réalisé de manière à être apte au rappel élastique de sorte que le recouvrement de coque (22) puisse réaliser suite à l'extension ou au refoulement un mouvement horizontal de la partie d'épine (14) par rapport à la partie de coque (10), l'espace creux fermé de l'espace intérieur de la coque (12) étant rempli d'un fluide.

2. Pied de support selon la revendication 1, **caractérisé en ce que** la partie d'épine (14) loge direction sur la partie en élastomère (16).
